# EUROPEAN PATENT APPLICATION

(11) **EP 1 722 520 A1**
(43) Date of publication of application: **15.11.2006**
(21) Application number: 05759452.5
(22) Date of filing: 30.06.2005
(51) Int. Cl.: H04L 12/56, H04L 12/28

(54) **A METHOD FOR IMPLEMENTING MULTICAST BASED ON MULTIPLE SERVICE TRANSMISSION PLATE**

(30) Priority: 30.06.2004 CN 200410060169
(71) Applicant: Huawei Technologies Co., Ltd., Longgang District, Shenzhen, Guangdong 518129 (CN)
(72) Inventor: PENG, Zhongwen, Huawei Administration Building, 518129 Shenzhen,Guangdong (CN); ZHONG, Laijun, Huawei Administration Building, 518129 Shenzhen,Guangdong (CN); LIU, Jianhua, Huawei Administration Building, 518129 Shenzhen,Guangdong (CN)
(74) Representative: Skuhra, Udo
(86) International application number: PCT/CN2005/000956
(87) International publication number: WO 2006/002596

(57) **Abstract**

A method for implementing multicast based on a Multi-Service Transport Platform (MSTP), by establishing a Label Switch Path (LSP) multicast tree branch from a source network node based on the MSTP to multiple destination network nodes. According to the LSP multicast tree branch, data packets can be transmitted in multicast manner from the source network node to multiple destination network nodes, so that the procedure of network node's transmitting the data packets to multiple parts is simplified. In the present invention, LSP is utilized and multiple protocols label switch is supported, so that service protection function, flow management and flow engineering can be implemented and good QoS guarantee can be provided, which is suitable for large-scale network construction; while the multicast method is simplified and effective, operational and controllable management upon communication networks can be implemented to provide reliable QoS guarantee for network terminals.

## Description

### Field of the Technology

The present invention relates generally to multicast service technology field, more particularly to a method for implementing multicast based on Multi-Service Transport Platform (MSTP).

### Background of the Invention

At present, with the increasing demands for video services, multicast services have advanced fast as the best way of supporting video services and are one of the most potential services in the future.

The fast development of multicast services results in new demands upon network operation. On one aspect, it is demanded that the network provides higher transmission bandwidth; on the other one, it is demanded that the network provides effective, operational and manageable supports for multicast services.

As one of the major service transmission carriers, a Multi-Service Transport Platform (MSTP) is widely applied, so it is of great importance to implement the function of supporting multicast services in the MSTP.

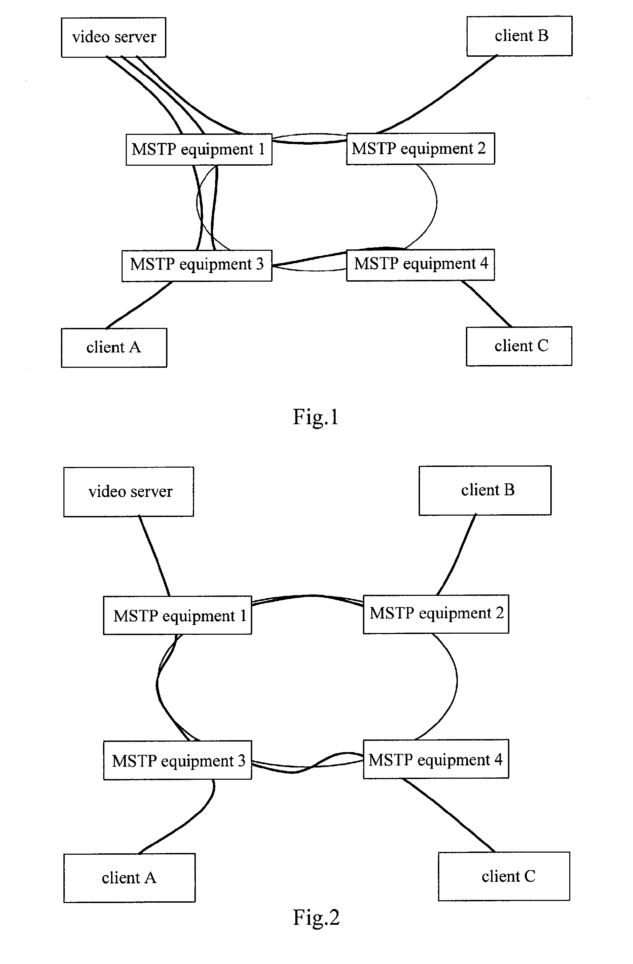

At present there are mainly two methods to implement multicast services in the MSTP:
Method 1: multicast services are implemented by adopting a traditional Client/Server (C/S) model and specific method thereof is shown in Figure 1.

In Figure 1, as a media stream server, the video server initiates a play process for media streams. When a client requests for data of a certain video server, a connection is established between the client and the video server through IP address of the video server and the connection manner can be Transmission Control Protocol (TCP) connection or others. The video server maintains a client list and transports media streams to every client that requests for the media streams by way of polling, according to the client list. For instance, client A, client B and client C all request for a certain media stream, then the video server will transport the media stream to MSTP equipment 1 for three times and transport the media stream to client A, client B and client C through MSTP equipment 3, MSTP equipment 2 and MSTP equipment 4 respectively.

It can be seen from the above method for implementing multicast services that, MSTP equipment does not actively complete multicast function of multicast data packets, and the multicast services are implemented completely by relying on the video server, so the video server is required to have very high configuration; moreover, the video server needs to maintain information of every client, which wastes the video server's resources; since media streams are different from data that are transmitted in traditional narrow-band services, therein media streams need very great transmission bandwidth, so when there are a large number of clients, the video server may not be competent; meanwhile, the same media streams may be transported repeatedly in the network, so the network resources are severely wasted, moreover, serious communication bottlenecks will occur probably on some low-bandwidth links.

Method 2: multicast services are implemented by adopting a layer 2 switching multicast model and specific method thereof is shown in Figure 2.

In Figure 2, the video server only needs to transport one copy of the media stream to MSTP equipment 1 and then MSTP equipment 1 duplicates this media stream to other multicast ports, like MSTP equipment 2 and MSTP equipment 3, according to multicast MAC address in the media stream transported from the video server. In the same way, MSTP equipment 3 can also duplicate the media stream transported from MSTP equipment 1 to MSTP equipment 4 and client A.

Since the main function of MSTP at present is transparent transport and layer 2 switch, in a layer 2 switch, it is needed to forward multicast data packets according to an internal multicast mask list, which can be maintained through static configuration or Internet Group Management Protocol Snooping (IGMP Snooping) technique. To implement multicast services through the layer 2 switch, a source address self-learning is needed and then it is needed to look up a MAC address routing table according to the multicast destination address. When the corresponding MAC address item is searched out, the item in the multicast port mask code list is taken out and the data packets are duplicated to the corresponding port according to the mask table.

It can be obviously seen from this method for implementing multicast services that, the load of the video server can be alleviated, the path bandwidth is saved and the communication bottlenecks are avoided. However, when this method for implementing multicast services is adopted, the forwarding procedure is relatively complicated, forwarding efficiency is low and a layer 2 switching domain must be configured, so the configuration course is complicated and not suitable for satisfying large-scale network construction requirement because the existing Ethernet technology is connectionless, which has insufficient Quality of Service (QoS) processing capability. This method cannot provide good QoS support for multicast services.

### Summary of the Invention

Therefore, an objective of the present invention is to provide a method for implementing multicast based on the multi-service transport platform so as to simplify the method for implementing multicast, increase efficiency of forwarding data packets and avoid transmission bottlenecks of multicast services.

### The present invention is implemented through the following technical scheme:

The method for implementing multicast based on multi-service transport platform includes:
according to destination of a data packet, configuring a Label Switch Path (LSP) multicast tree branch from each network node between a source network node and multiple destination network nodes to each downstream network node that is adjacent to each of the network nodes; wherein the configured LSP multicast tree branches form a LSP multicast tree from the source network node to each of the destination network nodes, and the LSP multicast tree corresponds to the data packet;
the network node duplicating the received data packet according to the LSP multicast tree, and transporting the duplicated data packet to the downstream destination network node along the LSP multicast tree until the data packet arrives at a client.

It can be seen from the above-illustrated technical scheme that, by establishing the LSP multicast tree according to the present invention, duplication for the data packet at video server or the layer 2 switching equipment in prior art is distributed to network nodes in the multicast network, so that the implementation of multicast service is simplified, transmission bottlenecks of multicast services are avoided and forwarding efficiency is increased when the network node based on multi-service transport platform is forwarding the data packet to multiple parts.

By establishing the Multicast LSP Table (MLT), fully making use of network nodes to utilize unicast LSP to implement a flow classification table, a Forwarding Information Base (FIB) and INSEGMENT during transmission of the data packet, and adding multicast LSP indication information and the index of MLT to a table, network nodes having Provider Edge property and those having Provider core property can conveniently transport the received data packets according to the corresponding LSP multicast tree branch or unicast LSP. In the present invention, LSP is utilized and multiple protocols label switch is supported, so that service protection function, flow management and flow engineering can be implemented and good QoS guarantee can be provided, which is suitable for large-scale network construction. Meanwhile, effective, operational and controllable management upon communication networks can be implemented to provide reliable QoS guarantee for network terminals.

### Brief Description of the Drawings

Figure 1 is a schematic diagram illustrating the method for implementing multicast based on the MSTP client/server model in the prior art;
Figure 2 is a schematic diagram illustrating the method for implementing multicast based on the multicast model of the MSTP layer 2 switch in the prior art;
Figure 3 is a schematic diagram illustrating the MSTP-based LSP multicast tree according to the present invention;
Figure 4 is a schematic diagram illustrating the multicast LSP data structure based on the MSTP according to the present invention;
Figure 5 is a flowchart illustrating the process of implementing multicast based on the MSTP according to the present invention.

### Detailed Description of the Invention

The key of the present invention is: establishing an LSP multicast tree from the source network node based on multi-service transport platform to multiple destination network nodes, and then the source network node transporting the data packet to each destination network node according to the LSP multicast tree.

Technical scheme of the present invention will be illustrated in detail hereinafter based on the key of the present invention.

Unicast Label Switch Path (LSP) is a point-to-point data transmission channel between the source network node and the destination network node. When multicast data packets are transported by utilizing LSP in the present invention, according to destination network nodes to which the multicast data packet is to be transported from the source network node, the LSP multicast tree is established from the source network node to multiple destination network nodes. The LSP between current node and downstream nodes in the LSP multicast tree is called LSP multicast tree branch, and each LSP multicast tree branch can determine an LSP from current node to one of its downstream nodes. There is at least one downstream node of current node in the present invention, in other words, there may be multiple LSP multicast tree branches from current node to downstream nodes and the LSP multicast tree in the present invention is constituted by the LSP multicast tree branches.

The network nodes according to the present invention are MSTP-based, which comprise MSTP-based Provider Edge (PE) nodes, MSTP-based Provider core (P) nodes and so on. The MSTP-based Provider Edge node mainly comprises: MSTP-based Provider Edge router, MSTP-based access layer equipment and so on; the MSTP-based Provider core node mainly comprises: MSTP-based Provider core router, MSTP-based convergence layer equipment and so on.

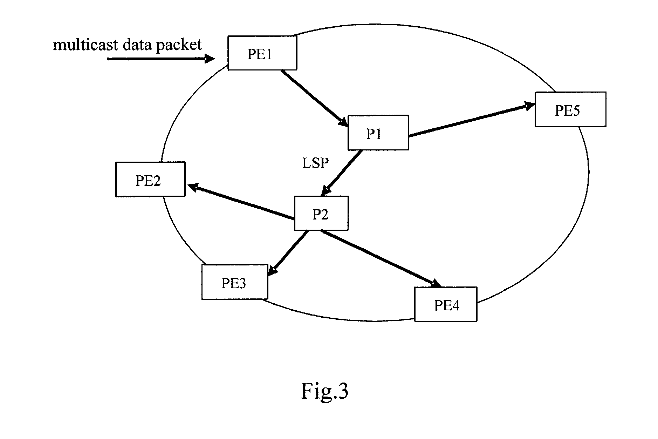

The LSP multicast tree established in the present invention will be illustrated hereinafter with reference to Figure 3.

In Figure 3, PE1, PE2, PE3, PE4, PE5, P1 and P2 are all MSTP-based network nodes, thereby, PE1, PE2, PE3, PE4 and PE5 are network nodes having Provider Edge (PE) property, while P1 and P2 are network nodes having Provider core (P) property.

It is assumed that a multicast data packet needs to be transported to a client, which is connected to destination network nodes PE2, PE3, PE4 and PE5, from source network node PE1. The LSP multicast tree established in the present invention is shown in Figure 3 and the specific method is as follows.

The LSP multicast tree branch between network node PE1 and its downstream node P1 is configured at network node PE1; the LSP multicast tree branches between network node P1 and its downstream node P2 and PE5 are configured at the network node P1; the LSP multicast tree branches between network node P2 and its downstream nodes PE2, PE3 and PE4 are configured at the network node P2; the LSP multicast tree branches between nodes PE2, PE3, PE4, PE5 and the connected client are configured respectively at PE2, PE3, PE4 and PE5, while the client can be deemed as a network node. The above-mentioned branches constitute the LSP multicast tree from the source network node to multiple destination network nodes.

Transmission procedures of the multicast data packet from source network node PE1 to destination network nodes PE2, PE3, PE4 and PE5 through the LSP multicast tree are like this: source network node PE1 duplicates the received multicast data packet and then transports it to P1; P1 duplicates the multicast data packet transported from PE1 and then transports it to PE5 and P2 respectively; P2 duplicates the multicast data packet transported from P1 and then transports it to PE2, PE3 and PE4 respectively; destination nodes PE2, PE3, PE4 and PE5 respectively duplicate the received multicast data packet and transport it to the connected clients.

The above-mentioned LSP multicast tree is not unique. It may have other forms and can be flexibly configured according to network construction of multicast network; the LSP multicast tree can also be configured dynamically by router discovery protocol's determining the downstream nodes of current node while the multicast data packet is being transported.

It can be seen from the above-mentioned procedure of transporting multicast data packets through the LSP multicast tree that, MSTP-based network nodes play the role of duplication for multiple copies and multipart transmission, so that the load of the video server may be alleviated, path bandwidth may be saved and communication bottlenecks may be avoided.

Because multicast sources are different, or multicast groups of the data packets from the same multicast source are different, the transmission can be implemented through different multicast trees in the network. For instance, as to VLAN 1 (Virtual Local Area Network) multicast data packet, the packet's destination network nodes are PE2 and PE3, while destination network nodes of VLAN 2 multicast data packet are PE2, PE3 and PE4, in this way, different multicast trees can be set even at the same network node P2 and each multicast data packet is duplicated and transported according to the corresponding multicast tree. Therefore, the method of transporting multicast data packets through the LSP multicast trees can also be implemented by setting up the corresponding relationship between transmission information of data packets and LSP multicast trees.

When the multicast data packet is being transported, it's certain that there is some information related to the transport, such as information of the network node's port that receives the data packet, data packet's VLAN identifier, label information of the data packet's Multi-Protocol Label Switching (MPLS) and so on, thus by setting up the corresponding relationship between transmission information of data packets and LSP multicast tree, when receiving the multicast data packets, network nodes can determine the corresponding multicast tree according to the transmission information and determine LSP multicast branches between current node and its multiple downstream destination network nodes according to the multicast tree, so that network nodes can duplicate copies of the data packet according to the number of corresponding LSP multicast tree branches and then transport the multicast data packet to adjacent multiple downstream destination network nodes through the above-mentioned corresponding multiple LSP multicast tree branches.

Information of each branch in the LSP multicast tree can be stored in a table, which can be called a Multicast LSP Table (MLT) and can be stored in each network node respectively. Content of each network node's MLT includes the LSP multicast tree branch information concerning the network node.

To look up the corresponding LSP multicast tree and branch of each multicast data packet in the MLT as soon as possible, the index of the MLT can be adopted, therefore, the corresponding relationship between transmission information of data packets and LSP multicast trees can be realized through the corresponding relationship between the transmission information of data packets and the index of MLTs.

Because MSTP-based network nodes can transport data packets through the unicast LSP, in order to make network nodes not only transport multicast data packets through LSP multicast tree branches, but also transport non-multicast data packets through the unicast LSP, to meet the demand of data packet transmission, the corresponding relationship between the transmission information of data packets and the multicast LSP indication information can be set up according to the present invention. The Multicast LSP indication information is used for determining whether the received data packet is to be transported through the unicast LSP or the LSP multicast tree branch. For instance, if multicast LSP indication information is 1, it means the data packet is to be transported through the LSP multicast tree branch. If the multicast LSP indication information is 0, it means the data packet is to be transported through the unicast LSP.

At present, when transporting the data packets using the unicast LSP, network nodes usually adopt flow classification table, Forwarding Information Base (FIB), INSEGMENT and OUTSEGMENT. To make the multicast method of the present invention simple, when setting up the corresponding relationship between the transmission information of data packets and the index of MLTs as well as the corresponding relationship between the transmission information of data packets and the multicast LSP indication information, the present invention makes full use of existing resources including flow classification table, FIB, INSEGMENT and OUTSEGMENT and the like.

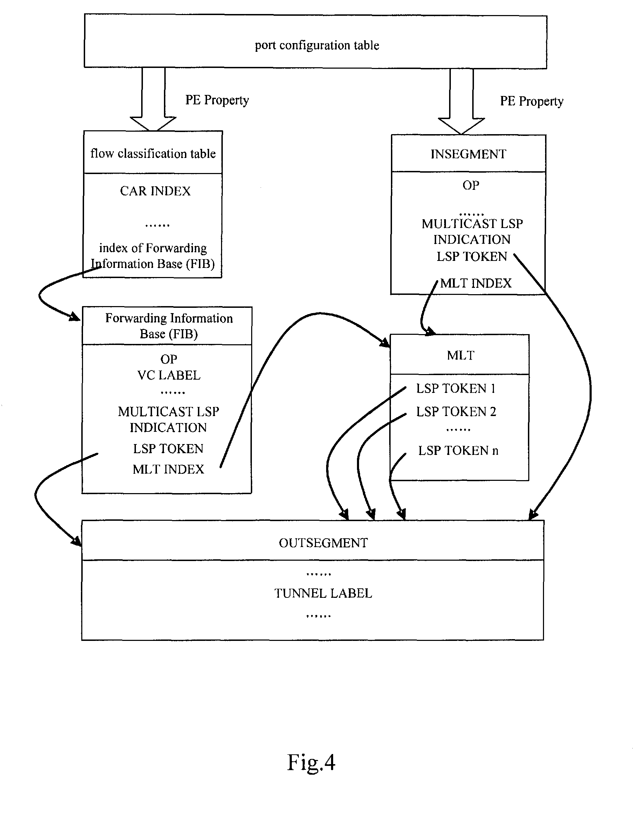

The method of implementing the corresponding relationship between the transmission information of data packets and the LSP multicast trees as well as the corresponding relationship between the transmission information of data packets and the multicast LSP indication information in the present invention will be illustrated in detail hereinafter with reference to Figure 4.

In Figure 4, data packets received by network nodes having P property carries the MPLS label information, while data packets received by network nodes having PE property do not carry MPLS label information, so network nodes having different properties perform different processes upon the received data packets. In network nodes having PE property, the index of MLTs and multicast LSP indication information are stored in FIB; in network nodes having P property, the index of MLTs and multicast LSP indication information are stored in the INSEGMENT table.

After the above-mentioned configuration, when a network node having PE property receives a data packet, the network node obtains the flow classification table corresponding to the port that receives this data packet, according to transmission information of the data packet, such as the network node's port that receives this data packet and/or the data packet's VLAN identifier and like. Since there are many items in FIB, to make the search convenient, a FIB INDEX is obtained from items of the flow classification table. The corresponding items in the FIB can be determined by utilizing the FIB INDEX. Items of the FIB comprise the multicast LSP indication information, according to which it can be determined whether this data packet should be transported through the unicast LSP or the LSP multicast tree branch.

If the data packet needs to be transported through the unicast LSP, the data packet will be transported according to the content in the OUTSEGMENT table to which an LSP TOKEN in FIB is linked.

If the data packet needs to be transported through the LSP multicast tree branch, the MLT INDEX in FIB will be obtained. MLT and specific item in the MLT will be determined according to the MLT INDEX and then the data packet will be duplicated for multiple copies and the copies will be transported according to contents in the OUTSEGMENT table to which multiple LSP TOKEN in FIB is linked.

When a network node having P property receives the data packet, the network node obtains the INSEGMENT table corresponding to the port that receives this data packet, according to the transmission information of the data packet, such as MPLS label information. After that, the network node obtains the multicast LSP indication information from INSEGMENT table and determines whether to transport this data packet through the unicast LSP or the LSP multicast tree branch according to the multicast LSP indication information.

If the data packet needs to be transported through the unicast LSP, the network node will transport the date packet according to the content in the OUTSEGMENT table to which LSP TOKEN in INSEGMENT is linked.

If the data packet needs to be transported through the LSP multicast tree branch, MLT INDEX in INSEGMENT will be obtained, MLT and specific item in the MLT will be determined according to the MLT INDEX and then the data packet will be duplicated for multiple copies and the copies will be transported according to contents in the OUTSEGMENT table to which multiple LSP TOKENs in FIB are linked.

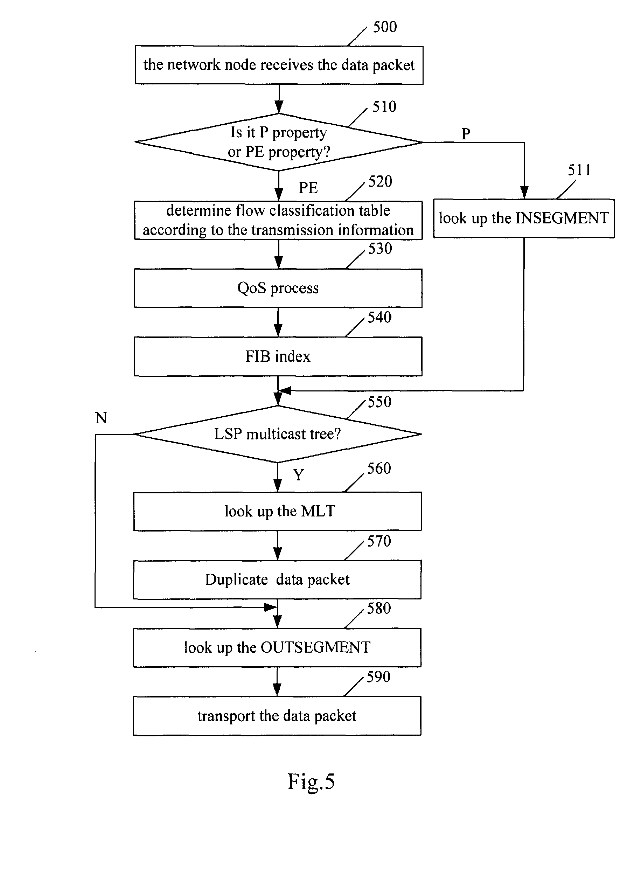

The method for implementing multicast based on the multi-service transport platform of the present invention will be illustrated in detail hereinafter with reference to Figure 5.

In Figure 5, step 500: the network node receives the data packet.

Step 510: the network node decides whether the port through which the network node receives the data packet is of P property or PE property according to the network port configuration table, if this port is of PE property, in step 520, according to transmission information of the received data packet, such as the network node's port that receives this data packet and/or the data packet's VLAN identifier, the corresponding flow classification table is determined.

Step 530: according to relevant items in the flow classification table and the agreed rules, flow classification is performed upon the data packet, and QoS process, like bit rate limitation, priority classification and other processes, is performed upon the data packet.

Step 540 is to obtain FIB INDEX in the flow classification table and determine the corresponding FIB according to the index information.

Step 550 is to determine whether to transport the data packet through the LSP multicast tree branch or the unicast LSP according to the multicast LSP indication information in the FIB. If the data packet is to be transported through the LSP multicast tree branch, in step 560, MLT INDEX in the FIB will be obtained and the corresponding LSP TOKEN in the MLT will be looked up according to the MLT INDEX.

Step 570 is to duplicate the data packets for corresponding number of copies according to all corresponding LSP TOKENs in the MLT.

Step 580 is to look up the corresponding content in the OUTSEGMENT table according to all the LSP TOKENs in the MLT.

Step 590 is to encapsulate and then transport the data packet through the port or the LSP flow dispatch according to contents in the OUTSEGMENT table.

In step 550, if the data packet is to be transported through the unicast LSP, go to step 580, in which the corresponding content in the OUTSEGMENT table will be looked up according to LSP TOKEN in the FIB. In step 590, the data packet is encapsulated and then transported through the port or LSP flow dispatch according to contents in the OUTSEGMENT table.

In step 510, if the port through which the network node receives the data packet is of P property, the data packet will carry MPLS label information; in step 511, MPLS label information of the data packet is obtained and INSEGMENT table is determined according to the label.

In step 550, it is decided whether to transport the data packet through the unicast LSP or the LSP multicast tree branch according to multicast LSP indication information in the INSEGMENT table. If the data packet is to be transported through the LSP multicast tree branch, in step 560, MLT INDEX in the INSEGMENT table will be obtained and the corresponding LSP TOKEN in MLT will be looked up according to the MLT INDEX, and then the data packet will be duplicated for multiple copies and forwarded through the above-illustrated steps 570, 580 and 590.

In step 550, if the data packet is to be transported through the unicast LSP, go to step 580, in which the corresponding content in the OUTSEGMENT table will be looked up according to the LSP TOKEN in the INSEGMENT table, then through the above-illustrated step 590, the data packet is encapsulated and then transported through the port or the LSP flow dispatch according to contents in the OUTSEGMENT table.

In the present invention, the LSP multicast tree that is established among the MSTP-based network nodes can be set in static manner such as through allocation commands and so on, or be set through protocol dynamically, like protocols related to MPLS, namely, contents in MLT can be set either statically or dynamically through certain protocol.

In the present invention, the corresponding relationship between transmission information of data packet and LSP multicast tree branches can also be set by adopting the above-mentioned static or dynamic manner, in other words, the MLT INDEX in FIB and INSEGMENT as well as the multicast LSP indication information can be set by adopting static manner or dynamic manner.

While the invention has been shown and described with reference to a preferred embodiment thereof, it will be understood by those skilled in the art that various changes in form and details may be made therein without departing from the spirit and scope of the invention as defined by the appended claims.

## Claims

1. A method for implementing multicast based on a multi-service transport platform, comprising:
according to destination of a data packet, configuring a Label Switch Path (LSP) multicast tree branch from each network node between a source network node and multiple destination network nodes to each downstream network node that is adjacent to each of the network nodes; wherein the configured LSP multicast tree branches form a LSP multicast tree from the source network node to each of the destination network nodes, and the LSP multicast tree corresponds to the data packet;
the network node duplicating the received data packet according to the LSP multicast tree, and transporting the duplicated data packet to the downstream destination network node along the LSP multicast tree until the data packet arrives at a client.

2. The method according to claim 1, wherein, the step of configuring an LSP multicast tree branch comprises, establishing a Multicast LSP Table (MLT) in a port configuration table of the network node, storing an LSP TOKEN that corresponds to each branch in each LSP multicast tree of the network node.

3. The method according to claim 1 or claim 2, wherein, the step of configuring an LSP multicast tree branch, further comprises:
a1. setting a corresponding relationship between transmission information of the data packet and the LSP multicast tree; and
the step duplicating the received data packet and transporting the duplicated data packet to the downstream network node comprises:
b1, according to the transmission information of the data packet, determining whether the packet has arrived at the destination network node, if yes, executing step b3; otherwise, executing step b2;
b2. the current network node determining the corresponding LSP multicast tree according to the transmission information of the data packet,
determining the corresponding LSP multicast tree branch according to the LSP multicast tree,
determining the number of copies of the data packet according to the branch number,
transmitting the data packet to the downstream network nodes of current network node respectively and then returning to step b1;
b3. according to the transmission information of the data packet, the destination network node determining the corresponding LSP multicast tree,
determining the corresponding LSP multicast tree branch according to the LSP multicast tree,
determining the number of copies of the data packet according to the branch number, transmitting the duplicated data packet to the client respectively.

4. The method according to claim 3, wherein step a1 comprises: establishing an index of the MLT in the port configuration table of the network node, where the index corresponds to the transmission information of the data packet;
and step b2 comprises:
determining the corresponding index of the MLT according to the transmission information of the data packet,
according to the corresponding index, determining the MLT and an index of the LSP TOKEN in the table
duplicating the data packet according to the number of the index of the LSP TOKEN,
looking up a corresponding content in an OUTSEGMENT table, encapsulating and transmitting the data packet according to the looked-up content.

5. The method according to claim 4, wherein step a1 further comprises: establishing LSP multicast indication information in the port configuration table of the network node, where the indication information corresponds to the transmission information of the data packet;
before step b1, the method further comprising:
according to the LSP multicast indication information, determining whether the data packet needs to be transmitted through the LSP multicast tree, if yes, executing step b1, otherwise, transmitting the data packet through a unicast LSP.

6. The method according to claim 5, wherein the network nodes is of a Provider Edge property;
the LSP multicast indication information, and the index of the MLT, are set in a Forwarding Information Base of the network node having the Provider Edge property;
the transmission information of the data packet comprises port information through which the network node receives the data packet, and/or a Virtual Local Area Network Identifier (VLAN ID).

7. The method according to claim 5, wherein, the network node is of a Provider core property;
the LSP multicast indication information, and the index of the MLT, are set in INSEGMENT table of the network nodes having the Provider Edge property;
the transmission information of the data packet comprises Multi-Protocol Label Switching (MPLS) label information.

8. The method according to claim 6 or claim 7, before step b1, further comprising:
determining property of a current network node according to the network port configuration table;
if the current network node is of the Provider Edge property,
determining a corresponding flow classification table, according to the network node's port through which receives the data packet and/or the VLAN ID,
based on a protocol rule, performing flow classification upon the data packet according to an item in a flow classification table ,
performing Quality of Service (QoS) process upon the data packet,
obtaining an index of the Forwarding Information Base in the flow classification table,
according to the obtained index, determining the index of the MLT and the LSP multicast indication information in the Forwarding Information Base; and
if the current network node is of the Provider core property,
obtaining the MPLS label information of the data packet,
according to the MPLS label information, determining the index of the MLT and
the LSP multicast indication information in the INSEGMENT table.

9. The method according to claim 1, wherein step of configuring an LSP multicast tree branch comprises:
statically configuring the LSP multicast tree; or configuring the LSP multicast tree through a protocol dynamically.

10. The method according to claim 3, wherein step al comprises:
statically configuring the corresponding relationship between the transmission information of the data packet and the LSP multicast tree; or
configuring the corresponding relationship between the transmission information of the data packet and the LSP multicast tree through a protocol dynamically.
